# EUROPEAN PATENT APPLICATION

(11) **EP 4 455 807 A1**
(43) Date of publication of application: **30.10.2024**
(21) Application number: 23169818.4
(22) Date of filing: 25.04.2023
(51) Int. Cl.: G05B 19/05

(54) **COMPUTER-IMPLEMENTED METHOD FOR CONFIGURING A SUB-SYSTEM OF A PLANT**

(71) Applicant: ABB SCHWEIZ AG, 5400 Baden (CH)
(72) Inventor: HOERNICKE, Mario, 76829 Landau (DE); GRUENER, Sten, 69514 Laudenbach (DE); SCHOCH, Nicolai, 69120 Heidelberg (DE); ESKANDANI, Nafise, 64380 Rossdorf (DE); STARK, Katharina, 69469 Weinheim (DE); BRAUN, Roland, 53859 Niederkassel Lülsdorf (DE)
(74) Representative: Maiwald GmbH

(57) **Abstract**

The invention relates to the field of industrial plants, particularly to a method for configuring a sub-system (12) of the industrial plant (10). The sub-system (12) comprises at least one sensor (20), at least one actuator (30) and at least one programmable logic controller, PLC (41, 42), The method comprises the steps of:
storing a description of the at least one sensor (20) in a database (15);
storing a description of the at least one actuator (30) in the database (15);
storing a PLC-list (40) comprising a description of the at least one PLC (41) in the database (15);
writing a controller program (50), the controller program (50) describing an action of the at least one actuator (30) caused by the at least one sensor (20);
selecting, based on the database (15) and the controller program (50), a PLC (41) of the PLC-list (40), which is able to functionally connect the sensor (20) and the actuator (30);
generating an application (60) for controlling the selected PLC (41), based on the selected PLC (41) and the controller program (50); and
transferring the application (60) to the selected PLC (41), thus configuring and/or functionally connecting the at least one sensor (20) and the at least one actuator (30) of the sub-system (12).

## Description

### Field of the Invention

The invention relates to the field of industrial plants, particularly to a method for configuring a sub-system of the industrial plant. The invention further relates to a Global Discovery Service, GDS, database, to a program element, and to a computer-readable storage medium.

### Background

As of today, selecting a PLC (Programmable Logic Controller) type for a sub-system of an industrial plant takes place quite early, e.g. in a planning phase of the sub-system. Furthermore, an upload of control programs to the particular instance of the selected PLC type is done manually, too. It would be desirable to support at least the selecting of the PLC by a method, e.g. by a computer-implemented method.

### Description

It is an objective of the invention to provide a support for selecting a PLC. This objective is achieved by the subject-matter of the independent claims. Further embodiments are evident from the dependent claims and the following description.

One aspect relates to a computer-implemented method for configuring a sub-system of an industrial plant, the sub-system comprising at least one sensor and at least one actuator and at least one programmable logic controller, PLC the method comprising the steps of:
storing a description of the at least one sensor in a database;
storing a description of the at least one actuator in the database;
storing a PLC-list comprising a description of the at least one PLC in the database;
writing a controller program, the controller program describing an action of the at least one actuator caused by the at least one sensor;
selecting, based on the database and the controller program, a PLC of the PLC-list, which is able to functionally connect the sensor and the actuator;
generating an application for controlling the selected PLC, based on the selected PLC and the controller program; and
transferring the application to the selected PLC, thus configuring and/or functionally connecting the at least one sensor and the at least one actuator of the sub-system.

The industrial plant may be configured for producing and/or for manufacturing substances, for instance materials and/or compounds. The industrial plant may comprise one or more sub-systems. Each sub-system may comprise components, such as sensors, actuators, and/or control units. Examples for sensors may comprise inductive, capacitive, resistive, and/or optical means (including switches), configured, e.g., for sensing pressure, flow, temperature, distance, and/or variations of these measures, e.g. speed, acceleration, etc. Examples for actuators may comprise pumps, compressors, vessels or pressure vessels, tanks, heat exchangers, furnaces, fans, cooling towers, valves, etc. Examples for control units may comprise one or more Programmable Logic Controllers, PLCs. Each PLC may control at least one actuator, based on data from at least one sensor and/or from at least one communication entity, e.g. comprising a message or the like.

The description of the at least one sensor may be stored in the database, e.g. in a common-type database or a specialized database, such as a so-called Global Discovery Service, GDS. The description of the at least one actuator may be stored in the database, e.g. in the same database and/or in a different database. The database(s) may further have stored a PLC-list comprising a description of the at least one PLC. The description of said elements - i.e. of the sensor(s), the actuator(s), and/or the PLC(s) - may be a generic description or a detailed description. The storing may include to register the elements in the database, e.g. to register the elements in the sub-system's network. The generic description may only comprise some essential data or requirements necessary for a correct function of these elements. The detailed description may be related to elements available or orderable in the market, e.g. comprising a concrete element, possibly including a manufacturer, an order number, and/or details of its specification. The database(s) may be organized in any way, for example as a single unit, a redundant unit, as a cloud, and/or as a mixture of these. The database(s) may only include elements that are available for a distinct sub-system. In an embodiment, this kind of limitation could be implemented by an attribute "for sub-system S".

The controller program may describe an action of the at least one actuator caused by the at least one sensor (and/or by a communication from at least one communication entity). The controller program may be implemented as a function block diagram, a ladder logic, a structured text, a sequential function chart, an iteration list, and/or as a cause-effect-matrix. Implementation examples for the controller program may be described in IEC61131-3. The "action" may comprise one or more inputs, for example one or more sensor data or sensor values, e.g. a distinct value, a exceeding or falling below a threshold, and/or another kind of input. Additionally or as an alternative, the controller program may be implemented by further programming languages, which have a similar semantic, for instance a cause-effect matrix (see below for an example), variations of other procedural languages, and others.

The selecting of the PLC of said PLC-list may be based on the database - which comprises the above-mentioned elements - and the controller program. The selecting of the PLC may at least comprise a checking if the selected PLC is able to functionally connect the at least one sensor (etc.) and the at least one actuator, so that the actions of the controller program can be performed. In other words, the method uses the controller program and the database to find a match between the requirements of the control application and the capabilities of the PLC. Optionally, further criteria for selecting the PLC may apply, e.g. some kind of priority. In cases when no adequate PLC can be found, an error message may be output.

When the PLC has been selected, an application for controlling the selected PLC can be generated, based on the selected PLC and the controller program, generating the application may comprise to select a generator, which produces code that is configured for controlling this selected PLC, for controlling the at least one actuator and/or for accessing input from the at least one sensor (etc.). The application, which runs on the PLC, is a means or configured for operating the at least one actuator, based on a cause from the sensor. By transferring the application to the selected PLC, the PLC may be configured and/or functionally connected to the at least one sensor and the at least one actuator of the sub-system. The sub-system, or the part of the sub-system that is controlled by this PLC, may be made operable by this.

The method described does not only provide a support for selecting a PLC, but makes it also possible to write, for controlling a sub-system, only one "generic" piece of software - i.e. the controller program -, which can, then, be automatically adapted to the most suitable PLC. This, furthermore, makes it easier to exchange PLCs, e.g. in case a PLC has a defect or a new PLC with more capabilities shall be used. Thus, both the flexibility may be increased and lifetime costs - e.g. including maintenance costs - may be decreased.

In some embodiments, each PLC of the PLC-list is attributed with a preference. The preference may be a rank, which may be based, e.g., on the performance, latency, environment specifications, cost, etc. of the PLCs of the sub-system of the industrial plant. By such a preference, the selection of the PLC may not only take into account, which PLC suits at all for a sub-system, but advantageously also, which one is the most suitable or the best one, considering one or more optimizing aspects.

In some embodiments, the selecting the PLC causes an error message. This may particularly apply in cases where only not-suitable PLCs are in the PLC-list. Hence, an erroneous PLC selection may be prohibited and communicated to a user.

In various embodiments, the method further comprises the step of starting to operate the sub-system of the industrial plant. This step may be performed right after having transferred the application to the selected PLC. In an embodiment, the starting may comprise to run test-sequences for the newly configured sub-system.

In various embodiments, the controller program is implemented as a function block diagram, as a ladder logic, as a structured text, as a sequential function chart, and/or as an iteration list. The function block diagram (FBD) is a graphical language for programmable logic controller design, that can describe the function between input variables and output variables. A function is described as a set of elementary blocks. Input and output variables are connected to blocks by connection lines. The ladder logic represents a program by a graphical diagram based on circuit diagrams of relay logic hardware. The structured text (ST or SCL) is syntactically similar to Pascal. The sequential function chart (SFC) is a visual programming language, which comprises steps with associated actions, transitions with associated logic conditions, and directed links between steps and transitions. The iteration list (IL) is a low level language and looks assembler-like. The controller program may be compatible to specifications of EN 61131-3.

In some embodiments, the PLC is described by a productUri according to OPC 10000-12, and the PLC comprises an OPC UA Client according to IEC62541. A term "https://compacthardwareselector.com/product/pm860ak01" may serve as a productUri example.

In some embodiments, the application is described by a keyword application Names according to OPC 10000-12. The applicationNames may provide device type names like "AC800M", "PM860AK01", as one option to determine the PLC product. This approach may need an access to a library of products. This library may be a look-up table where the key is a product name and the value found is a device description. The applicationUri may be reserved to bind any customer-application specific meta data.

In some embodiments, the database is a Global Discovery Service, GDS, according to IEC62541, and the GDS comprises an OPC UA Server according to IEC62541-12.

In some embodiments, the OPC UA Client and the OPC UA Server is described by a keyword applicationType according to OPC 1000012.

Based on this, workflows like application registration, PLC retrieval (or PLC discovery), application download, and/or PLC replacement may be described.

An application registration may comprise a registration of an OPC UA Server at a GDS, which involves an additional OPC UA Client, due to the fact that an OPC UA Server cannot communicate with another OPC UA Server, like the GDS. When an OPC UA Client connects to an OPC UA Server, this OPC UA Server submits additional meta data in conjunction with the Endpoint that has been selected by the OPC UA Client. Additional meta data (Endpoint.Description) may contain data, e.g. specified in ApplicationRecordDataType. In al some cases, an Endpoint.Description is configured in an OPC UA Server, i.e. the values needed for application Type, application Names, productUri and/or applicationUri may be found in the configuration settings of an OPC UA Server. Consequently, the initial differentiator may use configuration values for applicationNames or productUri to enable the envisioned function. The overall process of registering an application may be based on the standard OPC 10000-12.

The PLC retrieval (or PLC discovery) may use the GDS, which implements methods like FindApplications, a method that enables the OPC UA Client to retrieve any application that has been previously registered. When the OPC UA Client has extracted all OPC UA Servers from returned data, the OPC UA Client can check the value of productUri to determine the applications referring to known web resources where electronic data sheets for the PLCs are available. Additionally or as an alternative, to electronic data sheets may use or to refer to the AssetID as specified in the so-called Asset Administration Shell (AAS). After this iteration, the OPC UA Client may know a set of OPC UA Servers of PLCs, including the DiscoveryURL that is needed to establish a connection.

For the download, the electronic data sheets of the found PLCs may be used to find a match between the requirements of a control application and the capabilities of the PLC as described in the electronic data sheet. After the match has been determined the download of the control application may take place. To support a later replacement of the PLC the applicationUri of the PLC is added to the control application, which is stored by the engineering tool.

In various embodiments, the method further comprises the step of:
detecting a hardware defect of the selected PLC;
removing said selected PLC from the database;
selecting a second PLC, which connects the sensor and the actuator, based on the controller program;
generating an application, based on the selected second PLC and the controller program; and
transferring the application to the selected PLC, thus configuring and/or functionally connecting the at least one sensor and the at least one actuator of the sub-system.

This advantageously eases a PLC replacement in cases of a hardware defect. Particularly, for elements that are configured according to OPC 10000 may further be eased by using following exemplary proceeding: When the selected PLC experiences a hardware defect, the replacement may be prepared by copying the (generated) applicationUri into the PLC that shall become the replacement. Then, the new (second) PLC may be registered at the GDS as described above. The OPC UA Client inside the Engineering Tool may already have noticed the disappearing PLC and may restart the PLC discovery as described above. When the selected PLC's control program is logically bound to an applicationUri, the information to download the control application that corresponds to applicationUri of the new PLC may be used.

An aspect relates to a computer program product comprising instructions, which, when is executed by a computer and/or a controller, cause the computer and/or controller to carry out the method described above and/or below.

An aspect relates to a computer-readable storage medium where a computer program or a computer program product as described above is stored on.

An aspect relates to a Global Discovery Service, GDS, database according to IEC 62541-12 for storing and/or retrieving a PLC-list. The GDS may contain the PLC-list. The GDS' application layer is OPC UA and is suited for industrial communication.

For further clarification, the invention is described by means of embodiments shown in the figures. These embodiments are to be considered as examples only, but not as limiting.

### Brief Description of the Drawings

The drawings depict:
- **Fig. 1**: schematically a basic idea according to an embodiment;
- **Fig. 2**: schematically an aspect of an embodiment;
- **Fig. 3**: schematically a further aspect of an embodiment;
- **Fig. 4**: schematically an example of a sub-system according to an embodiment;
- **Fig. 5**: schematically a cause-effect matrix according to an embodiment;
- **Fig. 6**: schematically an aspect of a method according to an embodiment;
- **Fig. 7**: schematically a further aspect of a method according to an embodiment;
- **Fig. 8**: schematically a further aspect of a method according to an embodiment;
- **Fig. 9**: schematically a further aspect of a method according to an embodiment;
- **Fig. 10**: schematically a further aspect of a method according to an embodiment;
- **Fig. 11**: a flow diagram according to an embodiment.

### Detailed Description of Embodiments

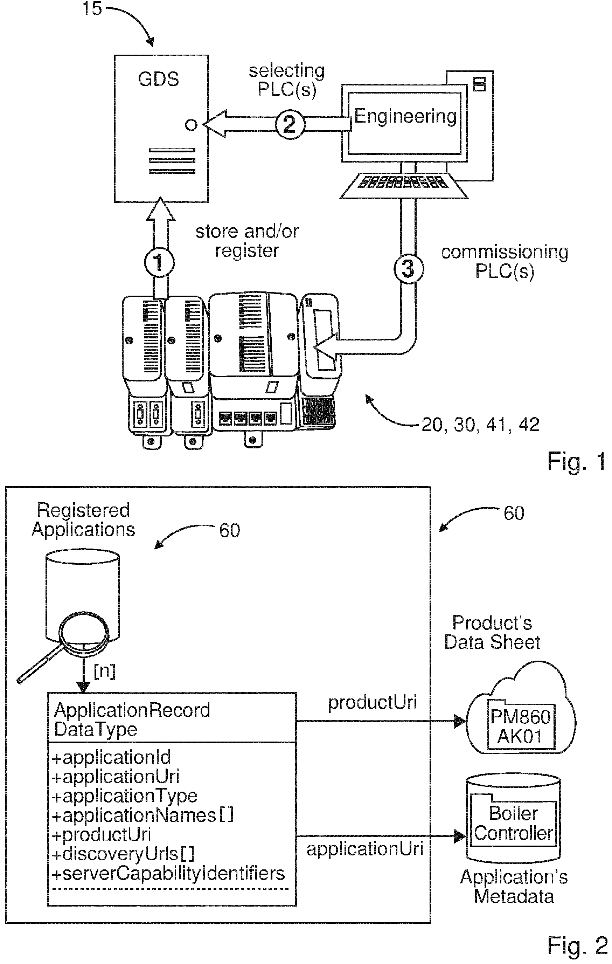

**Fig. 1** shows schematically a basic idea according to an embodiment. Firstly, elements - like sensor(s) 20, actuator(s) 30, PLC(s) 41, 42 - of a sub-system 12 of interest (not shown) need to be stored and/or registered in the database 15, step ①. The database 15 may be designed as a Global Discovery Service, GDS. As a next step ②, the one or more PLC(s) of the sub-system 12 may be selected. Afterwards (step ③), the PLC(s) may be commissioned. The commissioning may include to generate an application 60 (not shown) for controlling the selected PLC(s) 41, 42 and to transferring the application 60 to the selected PLC(s) 41, 42. Then, the sub-system 12 may start operating.

**Fig. 2** shows schematically an aspect of an embodiment. On the left side of **Fig. 2**, a GDS 15 is depicted. The GDS 15 may be designed according to IEC62541-12. The GDS 15 may contain one or more registered applications 60. Each application may be described by an Application Record Data Type, e.g. according to OPC 10000. The Application Record Data Type may include a URL - with keyword *productUri* according to OPC 10000-12 - which points to a link of a product data sheet of the PLC(s) 41, 42, e.g. to a PLC named "PM860AK01". The related *productUri* example may look like "https://compacthardwareselector.com/product/pm860ak01". The Application Record Data Type may include a further URL - with keyword *applicationUri* according to

OPC 10000-12 - which points to a link of the application's 60 metadata. The metadata may include cycle time, required memory, safety level. The product sheet of the PLC(s) 41, 42 and the application's metadata may be stored on any database, possibly on the GDS 15.

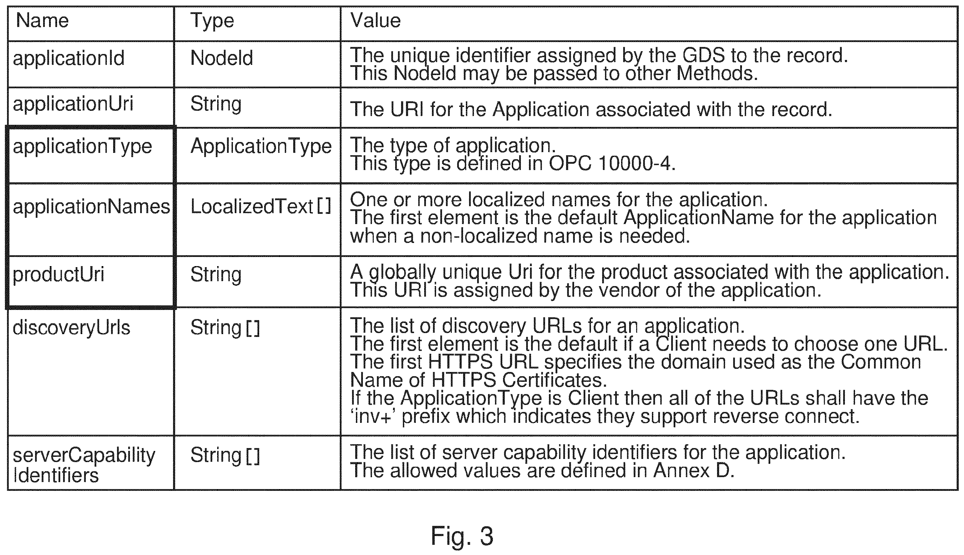

**Fig. 3** shows schematically a further aspect of an embodiment. **Fig. 3** is an excerpt from OPC 10000-12, sect. 6.3.5. In some embodiments, the names highlighted by the black frame may be relevant for conducting the method as described above and/or below. The name applicationType describes a general difference between OPC UA Servers and OPC UA Clients. The name applicationNames may provide device type names, for instance "AC800M" or "PM860AK01". The name productURI may provide similar information like "https://compacthardwareselector.com/product/pm860ak01". The productURI may refer to a web-resource or database (e.g., in a cloud) that provides electronic data sheets.

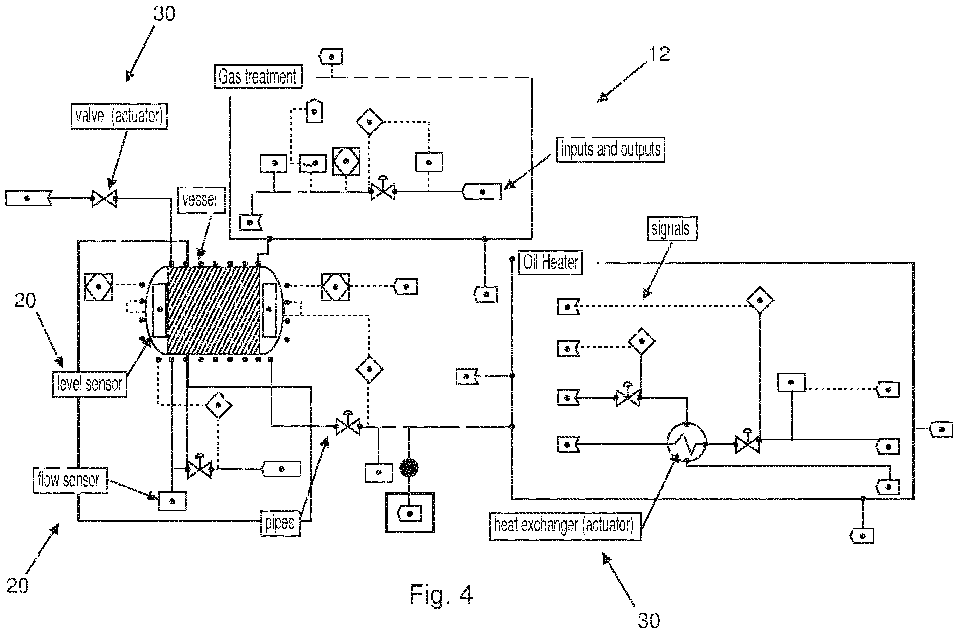

**Fig. 4** shows schematically an example of a graphic representation of a sub-system 12 according to an embodiment. The sub-system 12 may be part of an industrial plant 10 (not shown). The industrial plant 10 may comprise one or more sub-systems. The sub-system 12 may comprise sub-sub-systems like "Gas Treatment" or "Oil Heater". The sub-system 12 may comprise elements like one or more PLC(s) (not shown), a valve or a heat exchanger (as examples for an actuator 30), a level sensor or a flow sensor (as examples for a sensor 20), inputs (which may function as additional sensors) and outputs (e.g., of outputting information about the sub-system 12). An information flow between the PLC(s), sensors, actuators, inputs and outputs may be transmitted by means of electric signals, which are depicted as broken lines. The sub-system 12 may further comprise passive components, for instance a vessel. A material flow between at least some components of the sub-system 12 may be performed by means of pipes.

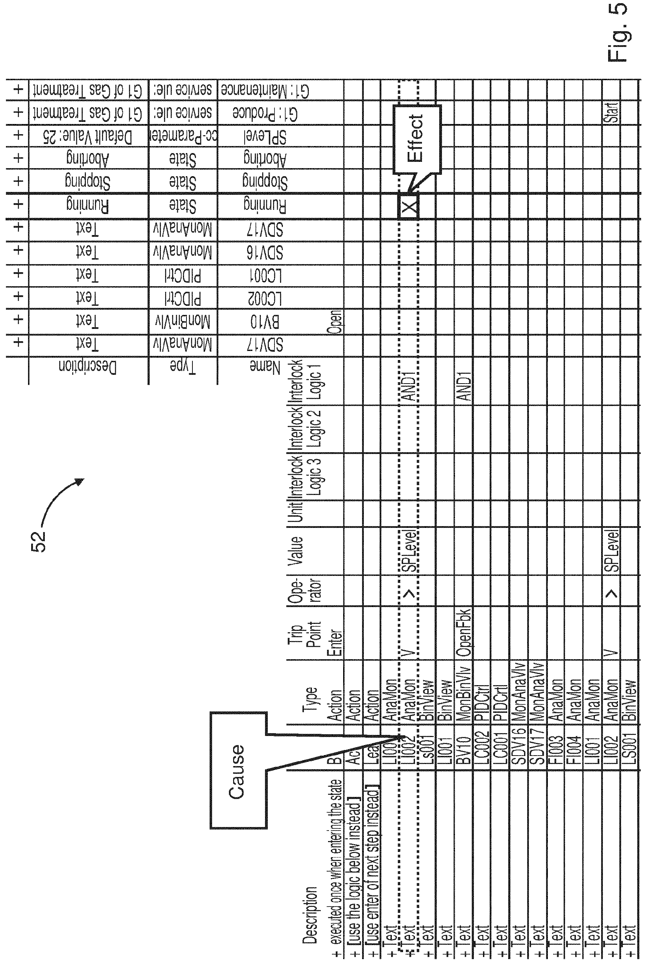

**Fig. 5** shows schematically a cause-effect matrix 52 according to an embodiment. The cause-effect matrix 52 may be basis for a controller program 50. For instance, the controller program 50 may be generated from the cause-effect matrix 52. On the left part of the cause-effect matrix 52, sensor signals - e.g. from sensors 20 as shown in **Fig. 4** **-** are listed, e.g. "LI001", "LI002", "LS001", etc. The sensor signals may include signals from inputs. The left part may contain further information on the sensors, e.g. a description or their type. Furthermore, condition(s) - e.g. values - when the sensor signals shall influence the actuators are listed. On the upper part of the cause-effect matrix 52, actuators and their actions are listed. The actions of the actuators are to be executed when a cause gets true. The highlighted line shows an example for a "cause", i.e. "if a value of sensor LI002 is greater than SPLevel". The highlighted column shows an example for a resulting "effect", i.e. moving the program into "running" state. The selected PLC has the task to implement this functional connection between sensor "LI002" and has, then, to move the program into "running" state according to the programmed effect.

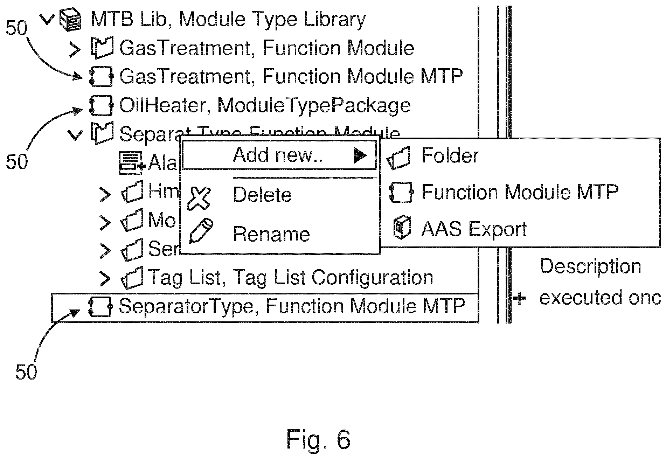

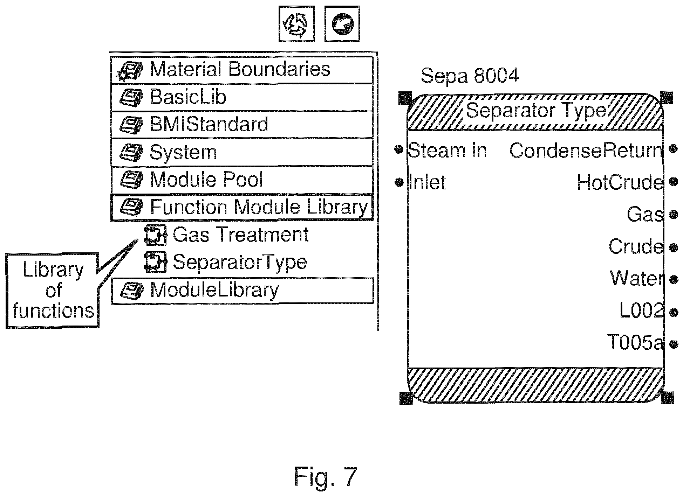

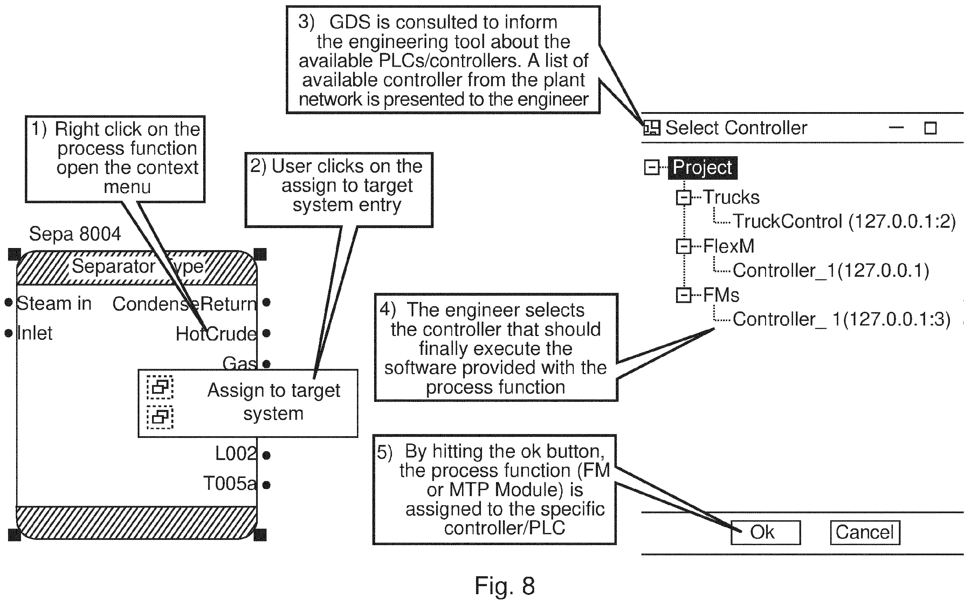

**Fig. 6** shows schematically an aspect of a method according to an embodiment. A person that uses a program, which implements a method as described above and/or below, may use a graphical interface. The graphical interface may include a Module Type Library (MTP: Module Type Package), which contains a list of elements and components of a plant's sub-system, e.g. the one depicted in **Fig. 4**. The list shown comprises sub-sub-systems like "Gas Treatment" or "Oil Heater". The sub-sub-systems may be "Function Module" or an MTP-based third party module. The "Function Module MTP" may contain a PLC type independent description of the process function, e.g. a controller program 50, e.g. one controller program 50 for each of "Gas Treatment", "Oil Heater", and "Separator Type". Thus, a library of functions is available, as shown in **Fig. 7**. A function of this library can be selected, e.g. by drag and drop (right part of **Fig.** 7), and appears, then, as a box "Sepa 8004". The "Separator Type" has "causes" (e.g. sensor signals) on its left side and "effects" (e.g. signals to actuators) on its right side. The box "Sepa 8004" may be marked as red as long as it is not assigned yet to a target system, but a PLC is attached to it, e.g. successfully selected, based on the database and the controller program. In **Fig. 8**, an assignment to a target system is shown, as can be done by means of the graphical interface. The "Assign to target system" box may be opened by a right-click on the box "Sepa 8004". Then the GDS is consulted to inform the user about the available PLCs or controllers, e.g. by means of a further box "Select Controller" (for selecting the PLC) on the graphical interface. The box "Select Controller" presents a list of available controllers of the sub-system, i.e. the PLC-list. The list of available controllers may be sent from the plant's network (the sub-system shall become or is already part of this plant). From the list of available controllers (i.e. PLCs), the controller that is to be used can selected. In an embodiment, the selected may be performed automatically, e.g. supported by a preference entry in the PLC-list. The selection may be confirmed by clicking on a, OK button. The finalized selection or assignment may turn the box "Sepa 8004" to green.

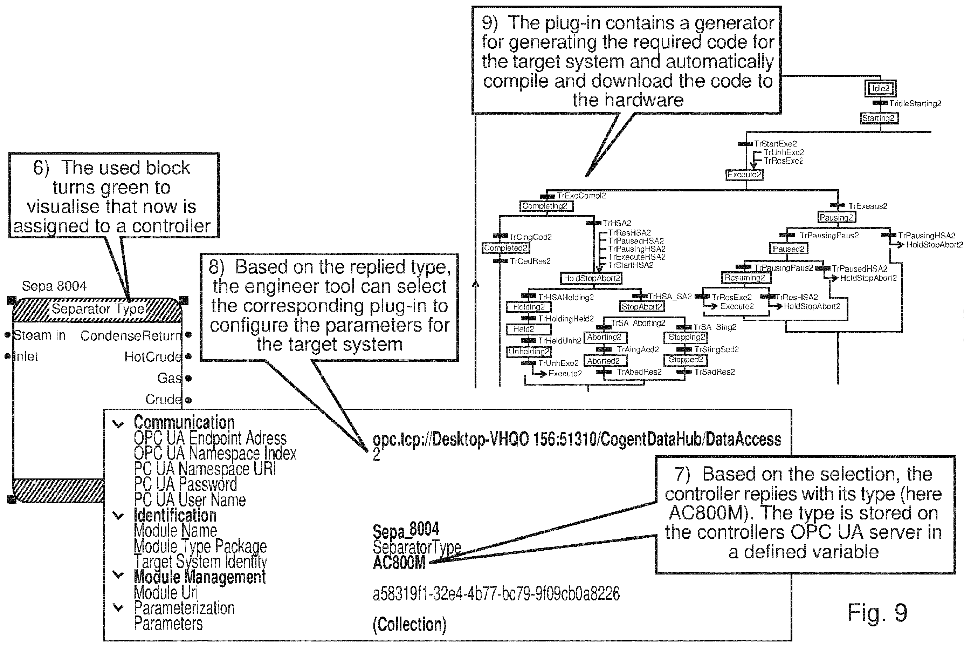

After the selection or assignment, the controller replies with its type (here "AC800M"), as shown in **Fig. 9** (bottom). This type may be stored on the controllers OPC UA server, e.g. in a defined variable "applicationNames". Based on this controller type, a generator for generating the required code for the target system may be selected. The code may be generated (as shown in **Fig. 9** right), compiled and downloaded as an application 60 to the selected PLC.

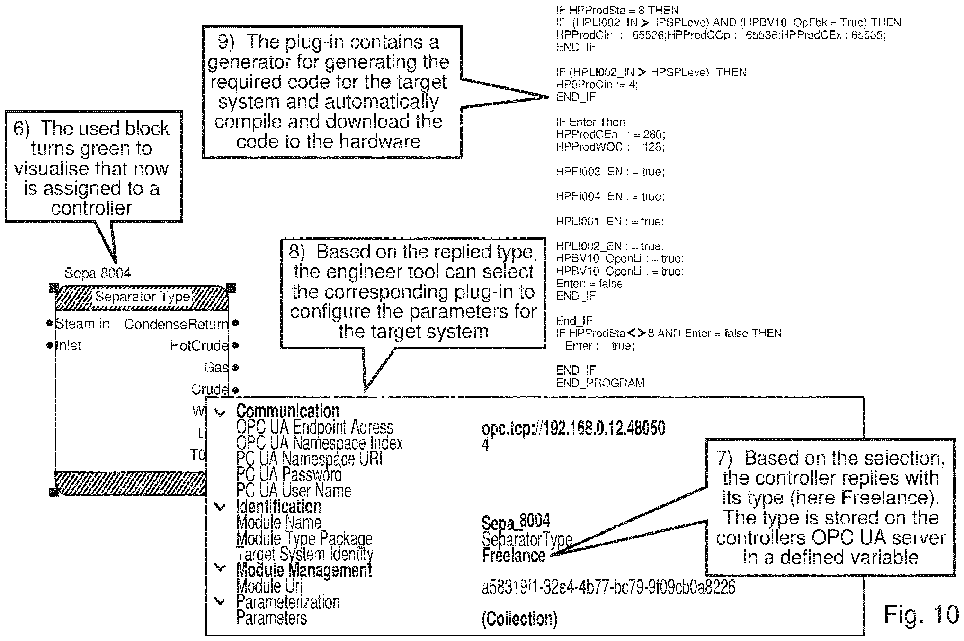

**Fig. 10** shows an example where an alternative PLC type "Freelance" is selected. This type may be stored on the controllers OPC UA server, e.g. in a defined variable "applicationNames". Based on this controller type, a generator for generating the required code for the target system may be selected. The code may be generated (as shown in **Fig. 10** right), compiled and downloaded as an application 60 to the selected PLC.

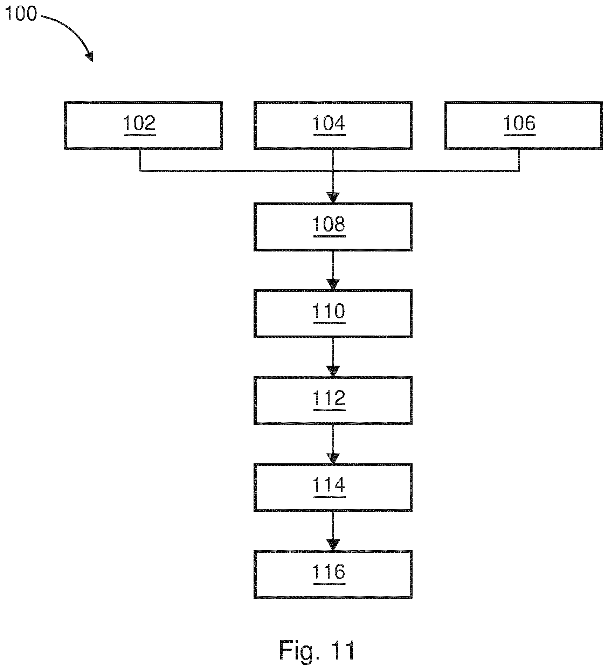

**Fig. 11** shows a flow diagram 100 of a computer-implemented method for configuring a sub-system 12 of an industrial plant 10 according to an embodiment. (For the reference signs: see the figures above.) The sub-system 12 comprises at least one sensor 20, at least one actuator 30 and at least one programmable logic controller, PLC 41, 42. In a step 102, a description of the at least one sensor 20 is stored in a database 15. In a step 104, a description of the at least one actuator 30 is stored in the database 15. In a step 106, a PLC-list 40 comprising a description of the at least one PLC 41 is stored in the database 15. The steps 102 - 106 may be performed in any sequence or in parallel. In a step 108, a controller program 50 is written; the controller program 50 describes an action of the at least one actuator 30 that is caused by the at least one sensor 20. The controller program 50 may, e.g., be implemented as a function block diagram, as a ladder logic, as a structured text, as a sequential function chart, and/or as an iteration list. In a step 110, based on the database 15 and the controller program 50, a PLC 41 of the PLC-list 40 is selected. The selected PLC 41 is able to functionally connect the sensor 20 and the actuator 30. In a step 112, an application 60 for controlling the selected PLC 41 is generated, based on the selected PLC 41 and the controller program 50. In a step 114, the application 60 is transferred to the selected PLC 41, thus configuring and/or functionally connecting the at least one sensor 20 and the at least one actuator 30 of the sub-system 12. In an optional step 116, the sub-system 12 of the industrial plant 10 my start its operation.

### List of Reference Signs

- 10: industrial plant
- 12: sub-system of the industrial plant
- 15: database, Global Discovery Service, GDS
- 20: sensor
- 30: actuator
- 40: PLC-list
- 41, 42: programmable logic controller, PLC
- 50: cause-effect matrix
- 52: cause-effect matrix
- 60: application
- 100: flow diagram
- 102-116: steps

## Claims

1. A computer-implemented method for configuring a sub-system (12) of an industrial plant (10), the sub-system (12) comprising at least one sensor (20), at least one actuator (30) and at least one programmable logic controller, PLC (41, 42), the method comprising the steps of:
storing a description of the at least one sensor (20) in a database (15);
storing a description of the at least one actuator (30) in the database (15);
storing a PLC-list (40) comprising a description of the at least one PLC (41) in the database (15);
writing a controller program (50), the controller program (50) describing an action of the at least one actuator (30) caused by the at least one sensor (20);
selecting, based on the database (15) and the controller program (50), a PLC (41) of the PLC-list (40), which is able to functionally connect the sensor (20) and the actuator (30);
generating an application (60) for controlling the selected PLC (41), based on the selected PLC (41) and the controller program (50); and
transferring the application (60) to the selected PLC (41), thus configuring and/or functionally connecting the at least one sensor (20) and the at least one actuator (30) of the sub-system (12).

2. The method of claim 1,
wherein each PLC (41, 42) of the PLC-list (40) is attributed with a preference.

3. The method of claim 1 or 2,
wherein selecting the PLC (41, 42) causes an error message.

4. The method of any one of the preceding claims, further comprising the step of:
starting to operate the sub-system (12) of the industrial plant (10).

5. The method of any one of the preceding claims,
wherein the controller program (50) is implemented as a function block diagram, as a ladder logic, as a structured text, as a sequential function chart, as an iteration list, and/or as a cause-effect-matrix.

6. The method of any one of the preceding claims, wherein
the PLC (41) is described by a *productUri* according to OPC 10000-12, and the PLC (41) comprises an OPC UA Client according to IEC62541,
the application (60) is described by a keyword *applicationNames* according to OPC 10000-12,
the database (15) is a Global Discovery Service, GDS, according to IEC62541, and the GDS comprises an OPC UA Server according to IEC62541-12, and/or the OPC UA Client and the OPC UA Server is described by a keyword *applicationType* according to OPC 10000-12.

7. The method of any one of the preceding claims, further comprising the steps of:
detecting a hardware defect of the selected PLC (41);
removing said selected PLC (41) from the database (15);
selecting a second PLC (42), which connects the sensor (20) and the actuator (30), based on the controller program (50);
generating an application (60), based on the selected second PLC (42) and the controller program (50); and
transferring the application (60) to the selected PLC (41), thus configuring and/or functionally connecting the at least one sensor (20) and the at least one actuator (30) of the sub-system (12).

8. A computer program product comprising instructions, which, when is executed by a computer and/or a controller, cause the computer and/or controller to carry out the method according to any one of the preceding claims.

9. A computer-readable storage medium on which the computer program according to claim 8 is stored.

10. A Global Discovery Service, GDS, database according to IEC62541-12 for storing and/or retrieving a PLC-list (40).
